# EUROPÄISCHE PATENTSCHRIFT

(11) **EP 1 655 529 B1**
(45) Veröffentlichungstag und Bekanntmachung des Hinweises auf die Patenterteilung: **29.10.2008**
(21) Anmeldenummer: 04026416.0
(22) Anmeldetag: 08.11.2004
(51) Int. Cl.: F16L 37/091

(54) **Schnellkupplung**
Quick connector
Raccord rapide

(43) Veröffentlichungstag der Anmeldung: 10.05.2006
(73) Patentinhaber: KULM HOLDING AG, 8355 Aadorf (CH)
(72) Erfinder: Baumgartner, Hans, 8125 Zollikerberg (CH)
(74) Vertreter: Weiss, Wolfgang

(56) Entgegenhaltungen:
- EP-A- 0 702 184
- EP-A- 1 215 434
- WO-A-90/08288
- GB-A- 2 334 562
- US-A- 4 630 848
- US-A- 4 635 975

## Beschreibung

Die Erfindung bezieht sich auf eine Schnellkupplung umfassend einen muffenförmigen Kupplungskörper mit einer Aufnahmeöffnung zur Aufnahme eines Endes einer Rohrleitung, ein Rückhalteelement zum Festhalten des Rohrleitungsendes in dem Kupplungskörper, ein Dichtungselement zur Abdichtung der Rohrleitung gegenüber dem Kupplungskörper und ein Sicherungselement zur Sicherung der Verbindung zwischen der Rohrleitung und dem Kupplungskörper.

Im Rohrleitungsbau werden vermehrt Rohrverbindungsteile eingesetzt, die durch einfaches Einstecken möglichst schnell und sicher eine Rohrverbindung bilden können. Je nach Anwendungsgebiet, sind unterschiedliche Ausführungen bekannt. Für aggressive Medien sind Ausführungen aus Kunststoff bekannt. Für hohe Temperaturen werden temperaturbeständige Werkstoffe, beispielsweise Polyamide, eingesetzt und für hohe Mediendrücke werden die Verbindungen zwischen der Rohrleitung und dem Muffenkörper durch eine Schraubverbindung, beispielsweise mit einer Überwurfmutter gesichert.

Aus der GB 2334562 ist eine Rohrkupplung bekannt. In einem Kupplungskörper ist eine Klemmhülse mit vier federnden Armen angeordnet. Die Arme, die in Öffnungen im Kupplungskörper passen, weisen Steuerkulissen auf, die von einer drehbaren Kappe betätigt werden. Die Rohrkupplung kann durch Drehen der Kappe gelöst werden.

Aus der EP 696342 A1 ist eine Schnellkupplung für Rohre oder Schläuche bekannt. Die Schnellkupplung besteht aus einem Aufnahmebereich und einem Verbindungsbereich. Im muffenförmigen Aufnahmebereich wird das Ende einer Rohrleitung aufgenommen und mit dem Verbindungsbereich wird die Schnellkupplung an weiteren Rohrleitungsbauteilen verbunden. Im Aufnahmebereich sind, vom Verbindungsbereich aus gesehen, nacheinander ein speziell ausgebildeter Sicherungsring, ein Distanzring und ein Dichtungsring angeordnet. Der Aufnahmebereich wird mit einem Schliessring abgeschlossen. Der Aufnahmebereich wird auf der Aussenseite mit einer Verstärkungshülse aus Aluminium verstärkt. Der Sicherungsring wird aus Metall hergestellt und weist ein U-förmiges Profil auf. Beide Enden des U-Profils weisen in die Richtung des Rohrendes. Der innere schräg gerichtete Teil des Sicherungsringes greift in die Aussenwand des Rohres ein, um ein Herausziehen des Rohres zu verhindern. Der äussere gerade Teil greift in den Boden des Aufnahmebereiches, um ein Ausdrehen der Rohrleitung zu ermöglichen.

Ausgehend von diesem Stand der Technik ist es Aufgabe der Erfindung, eine Schnellkupplung anzugeben, die in der Herstellung aus möglichst wenigen Teilen aufgebaut ist und in der Endmontage möglichst einfach und sicher zusammengesetzt werden kann.

Diese Aufgabe wird durch eine Schnellkupplung mit den Merkmalen des Anspruchs 1 gelöst.

Bevorzugte Weiterbildungen der Erfindung ergeben sich aus den abhängigen Ansprüchen.

Es ist von Vorteil, dass die Schnellkupplung nach der Herstellung der Einzelteile einfach vormontiert werden kann. Dies wird dadurch erreicht, dass das Sicherungselement in einem Spritzgussverfahren aus einem Kunststoffmaterial derart herstellbar ist, dass die freien Enden elastisch federnd ausgebildet sind. Dies wird auch dadurch erreicht, dass das Sicherungselement im Wesentlichen als ein U-förmiges Profil ausgebildet ist, wobei die freien Enden des Sicherungselementes der Aufnahmeöffnung des Kupplungskörpers umgreifend angeordnet sind. An den freien Enden des Sicherungselementes sind radial nach Innen und nach Aussen gerichtete Rastnasen ausgebildet, wobei die Rastnasen mit den Rastrippen zusammenwirkend ausgebildet sind.

Ein Ausführungsbeispiel der Erfindung wird anhand der Figuren beschrieben. Es zeigen:
Figur 1 einen Teilschnitt durch eine erfindungsgemässe Schnellkupplung mit einer Rohrleitung,
Figur 2 einen Teilschnitt durch die Schnellkupplung von Figur 1 ohne die Rohrleitung,
Figur 3 eine Sicht auf die Schnellkupplung von Figur 1 in perspektivischer Explosionsdarstellung,
Figur 4 eine Sicht auf ein Beispiel der nicht zu der Erfindung gehört.
Figur 5 eine Sicht auf ein Rückhalteelement der Schnellkupplung von Figur 4 und
Figur 6 einen Teilschnitt durch die Schnellkupplung von Figur 4 ohne die Rohrleitung.

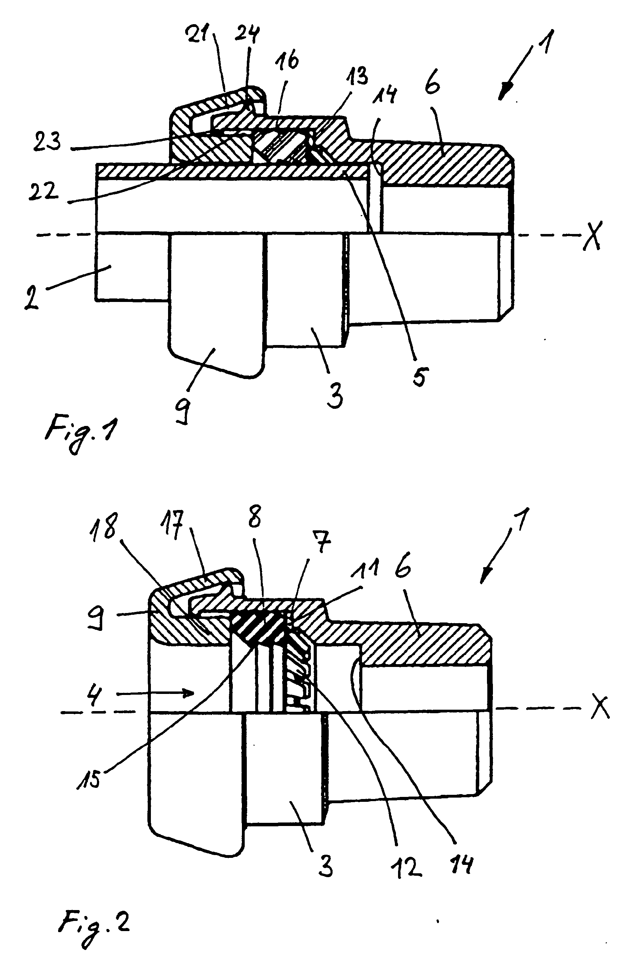

In Figur 1 ist eine Schnellkupplung 1 mit einer Rohrleitung 2 teilweise geschnitten dargestellt. In Figur 2 ist die gleiche Schnellkupplung 1 nochmals ohne Rohrleitung 2 dargestellt. Die Schnellkupplung 1 besteht aus einem Kupplungskörper 3 mit einer Aufnahmeöffnung 4. In die Aufnahmeöffnung 4 wird zur Herstellung einer Verbindung mit der Rohrleitung 2 das Ende 5 der Rohrleitung 2 wie in eine Muffe eingesteckt. In Figur 1 ist der Kupplungskörper 3 auf der linken Seite muffenförmig ausgebildet. Auf der rechten Seite ist schematisch einen Anschlussbereich 6 dargestellt. Der Anschlussbereich 6 dient zum Anschliessen der Schnellkupplung 1 und der Rohrleitung 2 an weiteren mediumsführenden Rohrleitungen oder Apparaten. Der Anschlussbereich 6 kann beispielsweise in einer Öffnung eines Behälters eingeschraubt oder eingeschweisst werden. Der Anschlussbereich 6 kann aber auch spiegelsymmetrisch als einen weiteren muffenförmigen Kupplungskörper ausgebildet sein.

Die Schnellkupplung 1 nimmt im muffenförmigen Kupplungskörper 3 nacheinander, gesehen vom Anschlussbereich 6, ein Rückhalteelement 7, ein Dichtungselement 8 und ein Sicherungselement 9 auf. Das Rückhaltelement 7 ist hier als einen geschlossenen Ring mit einem Flanschring 11 und mit schräg nach Innen gerichteten Zähnen 12 ausgebildet. Der Flanschring 11 liegt senkrecht zur Rohrleitungsachse x und somit parallel zu einem ersten Anschlag 13 im Kupplungskörper 3. Die Zähne 12 sind schräg auf das Ende 5 der Rohrleitung 2 gerichtet. Das Rückhalteelement 7 ist einstückig aus einem Werkstoff hergestellt, der wesentlich härter und steifer ist als der Werkstoff der Rohrleitung 2. Das Rückhalteelement 7 kann, je nach der Art des Mediums, das in der Rohrleitung gefördert wird, aus einem Metall oder aus einem Kunststoff hergestellt werden.

Die schräg nach Innen gerichteten Zähnen 12 lassen beim Einstecken der Rohrleitung 2 das Ende 5 durch und verhindern, dass die einmal eingesteckte Rohrleitung 2 aus der Schnellkupplung 1 ausgezogen werden kann. Die Rohrleitung 2 wird bis zu einem zweiten Anschlag 14 im Kupplungskörper eingesteckt. In Figur 1 ist angedeutet, wie die Rohrleitung 2 unter Belastung, d.h. entweder durch eine Ausziehkraft, die von Aussen an der Rohrleitung angreift oder durch einen Druck, der von Innen auf die Rohrleitung wirkt, nur geringfügig verschoben wird. Der Innendurchmesser des Rückhalteelementes 7 kommt im unbelasteten Zustand im Wesentlichen mit dem Aussendurchmesser der Rohrleitung 2 überein. Auch der Aussenumfang des zweiten Anschlages 14 wird an dem Aussendurchmesser der Rohrleitung 2 angepasst. Hiermit wird eine gute Führung der Rohrleitung 2 in dem Kupplungskörper 3 erreicht.

Die Massabweichungen, die durch Herstellungstoleranzen bedingt sind und die einen Spalt zwischen Muffenkörper 3 und Rohrleitung 2 freilassen, werden aufgefangen durch das Dichtungselement 8. Das Dichtungselement 8 ist aus einem wesentlich weicheren Werkstoff als das Rückhalteelement 7 hergestellt. Um eine gute Abdichtung zwischen Kupplungskörper 3 und Rohrleitung 2 zu gewährleisten, ist das Dichtungselement 8 als Ring mit einem rechteckigen Profil ausgebildet. An den radial nach Innen und nach Aussen gerichteten Wänden des Dichtungselementes 8 sind mehrere Dichtungsrippen 15,16 ausgebildet. Die Dichtungsrippen 15,16 weisen in der Art eines Sägezahns schräg nach Innen und Aussen. Durch die Anordnung der Dichtungsrippen 15,16, durch die Dimensionierung und Flexibilität des Werkstoffes wird erreicht, dass der Kupplungskörper 3 ausreichend abgedichtet wird. Das Dichtungselement 8 kann, weil es ein rechteckiges Profil hat, vor der Vormontage durch Verkleben mit dem parallel verlaufenden Flanschring 11 des Rückhaltelementes 7 zu einer Einheit verbunden werden.

In der Vormontage wird auch das Sicherungselement 9 im Kupplungskörper 3 vormontiert. Das Sicherungselement 9 ist als Ring mit einem U-förmigen Profil ausgebildet. Die freien Enden 17,18 des U greifen um die Aufnahmeöffnung 4 des Kupplungskörpers 3. Das Sicherungselement 9 wird aus einem Kunststoffmaterial in einem Spritzgussverfahren hergestellt. Die freien Enden 17,18 des Sicherungselementes 9 sind elastisch federnd ausgebildet und weisen auf der Innenseite des U jeweils senkrecht nach innen gerichtete Rastnasen 19,20 auf. Auch an der Aussenfläche 21 und Innenfläche 22 des Kupplungskörpers 3 sind Rastrippen 23,24 ausgebildet, die mit den Rastnasen 19,20 zur Verrastung zusammenwirken.

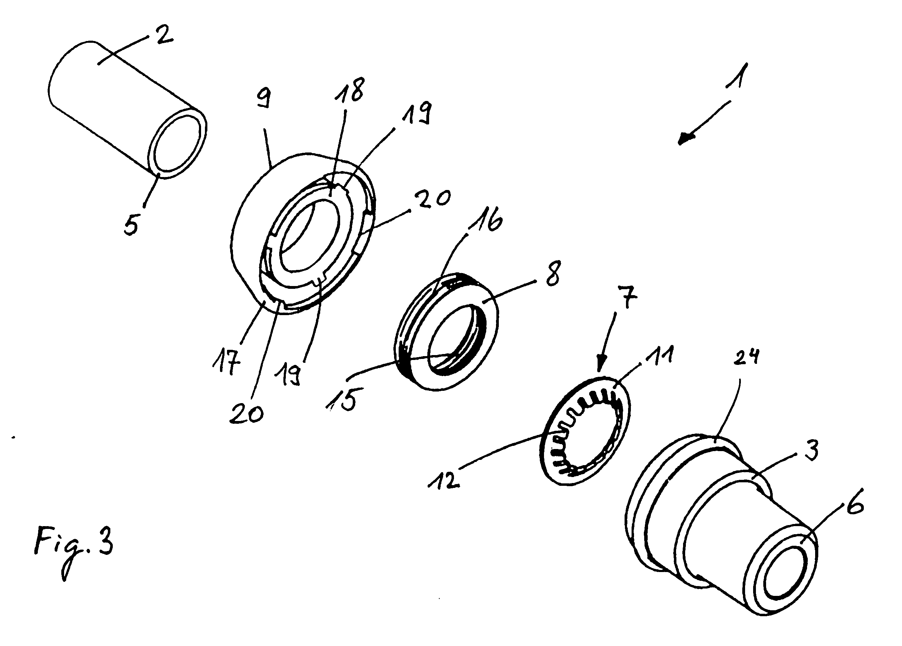

In Figur 3 ist die Schnellkupplung 1 perspektivisch in der Art einer Explosionsdarstellung abgebildet. Am Sicherungselement 9 sind die nach Aussen gerichtete Rastnasen 19 und die nach Innen gerichtete Rastnasen 20 ersichtlich. Die nach Aussen gerichtete Rastnasen 19 wirken zusammen mit der ersten Rastrippe 23, die in den Figuren 1 und 2 am Ende der Aufnahmeöffnung 4 auf der Innenseite des Kupplungskörpers 3 ersichtlicht sind. Die nach Innen gerichtete Rastnasen 20 wirken zusammen mit der zweiten Rastrippe 24, die in den Figuren 1,2 und 3 auf der Aussenseite des Kupplungskörpers 3 ersichtlich sind. Die Rastrippen 23,24 bilden eine radiale Verstärkung am Umfang der Wand des Kupplungskörpers 3. In Figur 3 ist ersichtlich, wie jeweils drei Rastnasen 19,20 in einem Winkelabstand von 120° regelmässig am Umfang verteilt angeordnet sind.

Die zweite äussere Rastrippe 24 ist im Vergleich mit der ersten inneren Rastrippe 23 auf einer unterschiedlichen Distanz vom Ende des Kupplungskörpers 3 ausgebildet. Hiermit wird erreicht, dass das Sicherungselement 9 in zwei Stellungen am Kupplungskörper 3 befestigt werden kann: eine erste, vordere Vorraststellung und eine zweite, hintere Endraststellung. Die Schnellkupplung 1 wird mit dem Sicherungselement 9 in der Vorraststellung vormontiert und ausgeliefert und kann vom Anwender nach dem Einstecken des Rohrleitungsendes 5 in die hintere Endraststellung gebracht werden. Die sichere Montage kann durch ein deutlich hörbares Klicken der Rastrippen 23,24 und Rastnasen 19,20 überwacht werden. In Figur 3 sind auch die Dichtungsrippen 15,16 an der Innen- und Aussenwand des Dichtungselementes 8 ersichtlich.

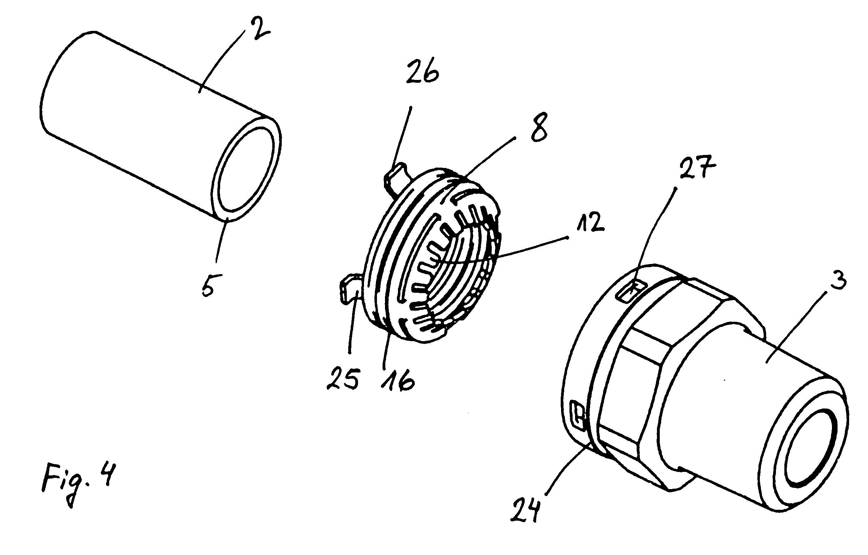

In den Figuren 4, 5 und 6 ist ein Beispiel der Schnellkupplung dargestellt, der nicht zu der Erfindung gehört. Im Unterschied zu den Figuren 1, 2 und 3 weist das Rückhalteelement 7 anschliessend an dem radial verlaufenden Flanschring 11 mehrere Arme 25 auf, die in axialer Richtung verlaufen. Die Arme 25 weisen am jeweiligen Ende Rastfinger 26 auf. Die Rastfinger 26 greifen in dazu passenden Öffnungen 27 in die Wand des Kupplungskörpers 3 ein. Hiermit wird eine sichere Platzierung des Rückhaltelementes 7 innerhalb des Kupplungskörpers 3 in radialer und axialer Richtung erreicht. Im Ausführungsbeispiel von Figur 4 sind das Rückhalteelement 7 und das Dichtungselement 8 zusammen als eine Einheit hergestellt worden.

Das Rückhalteelement 7, das beispielsweise aus einem Kunststoff hergestellt wird, wird durch Überspritzen der Arme 25 mit dem elastomeren Dichtungselement 8 zu einem einstückigen Element verbunden. Hierdurch entsteht ein einstückiges Element, das sowohl die Rückhaltefunktion als auch die Dichtungsfunktion übernimmt. Hierdurch wird erreicht, dass nur wenige Teile an Lager gehalten werden müssen. Die Vormontage der Schnellkupplung 1 wird dadurch einfacher und schneller.

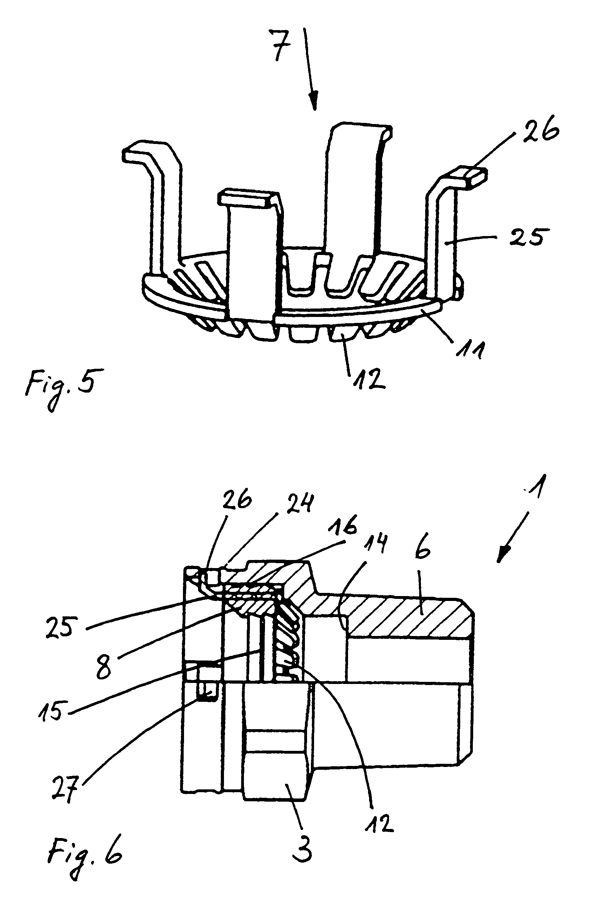

In Figur 5 ist das Rückhaltelement 7, das mit dem Dichtungselement 8 umspritzt wird, für sich alleine dargestellt. In Figur 6 ist die Schnellkupplung 1 zum Vergleich mit der Schnellkupplung aus Figur 2 jedoch ohne Rohrleitungsende 5 und ohne Sicherungselement 9 geschnitten dargestellt.

Mit der hier vorgeschlagenen Schnellkupplung 1 wird ein einfaches Rohrverbindungselement angeboten, das aus wenigen Einzelteilen aufgebaut ist, das im vormontierten Zustand ausgeliefert wird und das beim Endanwender kein Spezialwerkzeug wie beispielsweise Crimpzangen erforderlich macht. Die Rohrleitung kann ohne besondere Bearbeitung oder Vorbereitung des Rohrleitungsendes in die Schnellkupplung eingesteckt werden. Dies bedeutet, dass auch bei einer späteren Reparatur die Verbindung einfach getrennt werden kann und anschliessend die Rohrleitung wieder in einer neuen Schnellkupplung eingesteckt werden kann. Die Schnellkupplung 1 kann vollständig aus Kunststoffteilen aufgebaut sein und ist vor allem für kleinere Rohrleitungsdurchmesser geeignet. Die Schnellkupplung 1 kann sowohl für mediumsführenden Rohrleitungen als auch für die sichere und dichtende Durchführung von Kabeln oder Stäben durch Wänden verwendet werden.

## Patentansprüche

1. Schnellkupplung (1) umfassend
einen muffenförmigen Kupplungskörper (3) mit einer Aufnahmeöffnung (4) zur Aufnahme eines Endes (5) einer Rohrleitung (2),
ein Rückhalteelement (7) zum Festhalten des Rohrleitungsendes (5) in dem Kupplungskörper (3),
ein Dichtungselement (8) zur Abdichtung der Rohrleitung (2) gegenüber dem Kupplungskörper (3) und
ein Sicherungselement (9) zur Sicherung der Verbindung zwischen der Rohrleitung (2) und dem Kupplungskörper (3),
wobei das Sicherungselement (9) im Wesentlichen als ein U-förmiges Profil ausgebildet ist, das mit freien Enden (17,18) im Bereich der Aufnahmeöffnung (4) um die Wand des Kupplungskörpers (3) umgreifend angeordnet ist,
**dadurch gekennzeichnet, dass** an einer Aussenfläche (21) und Innenfläche (22) des Kupplungskörpers (3) im Bereich der Aufnahmeöffnung (4) Verstärkungs- und Rastrippen (23,24) ausgebildet sind, die sich in radialer Richtung nach Innen und Aussen erstrecken und in axialer Richtung hintereinander anbeordnet sind
**und dass** das U-förmige Sicherungselement (9) an den freien Enden (17, 18) weitere radial nach Innen und Aussen gerichtete und in axialer Richtung hintereinander angeordnete Rastnasen (19,20) aufweist, die nacheinander mit den Verstärkungs- und Rastrippen (23,24) zusammenwirken,
derart, dass die Schnellkupplung (1) zur Aufnahme des Rohrleitungsendes (5) in einer ersten Raststellung vorbereitbar ist und dass nach der Aufnahme die Verbindung zwischen dem Kupplungskörper (3) und dem Rohrleitungsende (5) in einer zweiten Raststellung gesicherbar ist.

2. Schnellkupplung (1) nach dem Anspruch 1, **dadurch gekennzeichnet, dass** das Sicherungselement (9) in einem Spritzgussverfahren aus einem Kunststoffmaterial derart herstellbar ist, dass die freien Enden (17,18) elastisch federnd ausgebildet sind.

3. Schnellkupplung (1) nach mindestens einem der Ansprüche 1 oder 2, **dadurch gekennzeichnet, dass** die Rastrippen (24) auf der Aussenfläche (21) des Kupplungskörpers (3) und die Rastrippen (23) auf der Innenfläche (22) des Kupplungskörpers (3) auf unterschiedlicher axialer Distanz von der Aufnahmeöffnung (4) ausgebildet sind.

4. Schnellkupplung (1) nach mindestens einem der Ansprüche 1 bis 3, **dadurch gekennzeichnet, dass** das Dichtungselement (8) als ein Ring mit einem im Wesentlichen rechteckigen Profil ausgebildet ist.

5. Schnellkupplung (1) nach mindestens einem der Ansprüche 1 bis 4, **dadurch gekennzeichnet, dass** an den radial nach Aussen und Innen gerichteten Wänden des Dichtungselements (8) mehrere Rippen (15,16) ausgebildet sind, wobei die Rippen (15,16) in der Art eines Sägezahns hintereinander angeordnet sind.

6. Schnellkupplung (1) nach mindestens einem der Ansprüche 1 bis 5, **dadurch gekennzeichnet, dass** das Rückhalteelement (7) als ein Ring mit schräg nach Innen gerichteten Zähnen (12) und mit einem senkrecht zur Rohrleitungsachse X angeordneten Ringflansch (11) ausgebildet ist.

7. Schnellkupplung (1) nach mindestens einem der Ansprüche 1 bis 6, **dadurch gekennzeichnet, dass** der Ringflansch (11) des Rückhalteelementes (7) zwischen einer ersten Schulter (13) des Kupplungskörpers (3) und dem Dichtungselement (8) angeordnet ist.

8. Schnellkupplung (1) nach mindestens einem der Ansprüche 1 bis 7, **dadurch gekennzeichnet, dass** der Ringflansch (11) mit dem Dichtungselement (8) verbindbar angeordnet ist.

9. Schnellkupplung (1) nach mindestens einem der Ansprüche 1 bis 8, **dadurch gekennzeichnet, dass** das Rückhalteelement (7) integral mit dem Dichtungselement (8) herstellbar ausgebildet ist.

10. Schnellkupplung (1) nach mindestens einem der Ansprüche 1 bis 9, **dadurch gekennzeichnet, dass** das Rückhalteelement (7) aus Kunststoffmaterial herstellbar ausgebildet ist.

## Claims

1. Quick coupling (1) comprising a sleeve-shaped coupling body (3) with a receiving opening (4) to receive one end (5) of a pipe (2), a retaining element (7) to hold the end (5) of the pipe in the coupling body (3), a sealing element (8) to seal the pipe (2) against the coupling body (3) and a securing element (9) to secure the connection between the pipe (2) and the coupling body (3), the securing element (9) being executed essentially in the form of a U-shaped profile, which is arranged with the free ends (17,18) around the wall of the coupling body (3) in the area of the receiving opening (4), **characterized in that** reinforcing ribs and locking ribs (23,24) are executed in the region of the receiving opening (4) on an external surface (21) and an internal surface (22) of the coupling body (3), which ribs extend inwards and outwards in a radial direction and are arranged one behind the other in an axial direction and **in that** the U-shaped securing element (9) has, at the free ends (17, 18), further locking lugs (19, 20) which extend radially inwards and outwards and which are arranged one behind the other in an axial direction and which interact in succession with the reinforcing ribs and locking ribs (23, 24), in such a way that the quick coupling (1) can be prepared to receive the end (5) of the pipe in a first locking position, and that, after the end (5) of the pipe is received, the connection between the coupling body (3) and the end (5) of the pipe can be secured in a second locking position.

2. Quick coupling (1) according to Claim 1, **characterized in that** the securing element (9) is capable of being manufactured from a plastic material by an injection molding process in such a way that the free ends (17,18) adopt an elastic and resilient form.

3. Quick coupling (1) according to at least one of Claims 1 or 2, **characterized in that** the locking ribs (24) on the outer surface (21) of the coupling body (3) and the locking ribs (23) on the inner surface (22) of the coupling body (3) are executed at a different axial distance from the receiving opening (4).

4. Quick coupling (1) according to at least one of Claims 1 to 3, **characterized in that** the sealing element (8) is executed as a ring with an essentially rectangular profile.

5. Quick coupling (1) according to at least one of Claims 1 to 4, **characterized in that** a plurality of ribs (15,16) are formed on the radially inward-facing and outward-facing walls of the sealing element (8), in conjunction with which the ribs (15,16) are arranged one after the other in the manner of a saw tooth.

6. Quick coupling (1) according to at least one of Claims 1 to 5, **characterized in that** the retaining element (7) is executed as a ring with teeth (12) facing inwards at an angle and with a ring flange (11) arranged perpendicularly to the axis X of the pipe.

7. Quick coupling (1) according to at least one of Claims 1 to 6, **characterized in that** the ring flange (11) of the retaining element (7) is arranged between a first shoulder (13) in the coupling body (3) and the sealing element (8).

8. Quick coupling (1) according to at least one of Claims 1 to 7, **characterized in that** the ring flange (11) is arranged in such a way as to be capable of connection to the sealing element (8).

9. Quick coupling (1) according to at least one of Claims 1 to 8, **characterized in that** the retaining element (7) is executed so that it is capable of being manufactured integrally with the sealing element (8).

10. Quick coupling (1) according to at least one of Claims 1 to 9, **characterized in that** the retaining element (7) is executed so that it is capable of being manufactured from a plastic material.

## Revendications

1. Raccord rapide (1) comprenant
un corps d'accouplement (3) en forme de manchon, comprenant une ouverture de réception (4) pour recevoir une extrémité (5) d'une conduite tubulaire (2),
un élément de retenue (7) pour fixer l'extrémité (5) de la conduite tubulaire dans le corps d'accouplement (3),
un élément d'étanchéité (8) pour étancher la conduite tubulaire (2) vis-à-vis du corps d'accouplement (3) et
un élément de fixation (9) pour fixer la connexion entre la conduite tubulaire (2) et le corps d'accouplement (3),
l'élément de fixation (9) étant réalisé essentiellement sous la forme d'un profilé en forme de U, qui est disposé de manière à venir en prise avec des extrémités libres (17, 18) autour de la paroi du corps d'accouplement (3) dans la région de l'ouverture de réception (4),
**caractérisé en ce que** des nervures de renforcement et d'encliquetage (23, 24) sont réalisées sur une surface extérieure (21) et une surface intérieure (22) du corps d'accouplement (3) dans la région de l'ouverture de réception (4), lesquelles s'étendent vers l'intérieur et vers l'extérieur dans la direction radiale et sont disposées l'une derrière l'autre dans la direction axiale, et
**en ce que** l'élément de fixation en forme de U (9) présente aux extrémités libres (17, 18) d'autres ergots d'encliquetage (19, 20) orientés radialement vers l'intérieur et vers l'extérieur et disposés l'un derrière l'autre dans la direction axiale, lesquels coopèrent l'un après l'autre avec les nervures de renforcement et les nervures d'encliquetage (23, 24),
de telle sorte que le raccord rapide (1) puisse être préparé pour recevoir l'extrémité (5) de la conduite tubulaire dans une première position d'encliquetage et qu'après la réception, la connexion entre le corps d'accouplement (3) et l'extrémité (5) de la conduite tubulaire puisse être fixée dans une deuxième position d'encliquetage.

2. Raccord rapide (1) selon la revendication 1, **caractérisé en ce que** l'élément de fixation (9) peut être fabriqué dans un procédé de moulage par injection en un matériau en plastique, de telle sorte que les extrémités libres (17, 18) soient réalisées de manière flexible élastique.

3. Raccord rapide (1) selon au moins l'une quelconque des revendications 1 ou 2, **caractérisé en ce que** les nervures d'encliquetage (24) sur la surface extérieure (21) du corps d'accouplement (3) et les nervures d'encliquetage (23) sur la surface intérieure (22) du corps d'accouplement (3) sont réalisées à une distance axiale différente de l'ouverture de réception (4).

4. Raccord rapide (1) selon l'une quelconque des revendications 1 à 3, **caractérisé en ce que** l'élément d'étanchéité (8) est réalisé sous la forme d'une bague avec un profil sensiblement rectangulaire.

5. Raccord rapide (1) selon au moins l'une quelconque des revendications 1 à 4, **caractérisé en ce que** plusieurs nervures (15, 16) sont réalisées sur les parois de l'élément d'étanchéité (8) orientées radialement vers l'extérieur et vers l'intérieur, les nervures (15, 16) étant disposées les unes derrière les autres à la manière de dents de scie.

6. Raccord rapide (1) selon au moins l'une quelconque des revendications 1 à 5, **caractérisé en ce que** l'élément de retenue (7) est réalisé sous forme de bague avec des dents (12) orientées obliquement vers l'intérieur et avec une bride annulaire (11) disposée perpendiculairement à l'axe X de la conduite tubulaire.

7. Raccord rapide (1) selon au moins l'une quelconque des revendications 1 à 6, **caractérisé en ce que** la bride annulaire (11) de l'élément de retenue (7) est disposée entre un premier épaulement (13) du corps d'accouplement (3) et l'élément d'étanchéité (8).

8. Raccord rapide (1) selon au moins l'une quelconque des revendications 1 à 7, **caractérisé en ce que** la bride annulaire (11) est disposée de manière à pouvoir être connectée à l'élément d'étanchéité (8).

9. Raccord rapide (1) selon au moins l'une quelconque des revendications 1 à 8, **caractérisé en ce que** l'élément de retenue (7) est réalisé de manière à pouvoir être fabriqué intégralement avec l'élément d'étanchéité (8).

10. Raccord rapide (1) selon au moins l'une quelconque des revendications 1 à 9, **caractérisé en ce que** l'élément de retenue (7) est réalisé de manière à pouvoir être fabriqué en un matériau en plastique.
